# EUROPEAN PATENT APPLICATION

(11) **EP 2 108 544 A1**
(43) Date of publication of application: **14.10.2009**
(21) Application number: 09275023.1
(22) Date of filing: 08.04.2009
(51) Int. Cl.: B60P 3/20, B62D 35/00

(54) **Air guiding device for a refrigerated trailer**

(30) Priority: 10.04.2008 GB 0806558
(71) Applicant: G.A.H. (Refrigeration Products) Limited, Woodbridge, Suffolk IP13 9AZ (GB)
(72) Inventor: Reader, John, Woodbridge, Suffolk IP12 2TW (GB)
(74) Representative: Exell, Jonathan Mark

(57) **Abstract**

An aerodynamic enclosure (10) for a refrigeration unit of a vehicle (100) is described. The enclosure (10) includes a spoiler (30), the spoiler (30) having an aerodynamic surface (31) arranged, when the enclosure is positioned in an air flow, to guide a substantial proportion of the air away from the enclosure (10), the spoiler (30) further comprising one or more air inlets (32) arranged to guide at least a part of the remaining air into the interior of the spoiler.

## Description

### Field of the Invention

The present invention relates to an aerodynamic enclosure that is particularly applicable for housing cooling condensers of refrigerated lorries and vans.

### Background to the Invention

Refrigerated cargo carrying vehicles are commonly used to transport goods which must be maintained at other than ambient temperatures. For example, a refrigerated box that is part of a van or pulled by a lorry cab is commonly used for this purpose.

The interior of a refrigerated box is commonly cooled by a refrigeration unit carried on the wall of the box or on top of the cab's roof. The refrigeration unit comprises various components, including a condenser, and the refrigeration unit is commonly housed within an enclosure which only partially encloses the unit. The enclosure is provided with an opening to receive outside air to cool the condenser.

The term "refrigeration unit" as used herein means the commonly used unit which provides cooling or heating to the interior of the cargo carrying vehicle. For example, when the box is used to haul certain goods in freezing temperatures, the refrigeration unit is employed as a heating unit. In this connection, it is sometimes known to utilize pivotal metal shutters for closing or partly closing the opening to improve control of airflow to the refrigeration unit such an apparatus is disclosed in U.S. 4,310,192.

The enclosure described above is not aerodynamically configured, and thus it does not reduce the aerodynamic drag of the vehicle. In fact, it may well increase the aerodynamic drag, particularly when the shutters are open.

It is known to employ a wind deflector on a cab's roof to improve the aerodynamic profile of a vehicle. However, although a wind deflector reduces the drag of the vehicle, it directs airflow away from the site typically selected for the refrigeration unit and therefore reduces the air supplied to the intakes of the condenser.

### Statement of Invention

According to an aspect of the present invention, there is provided an aerodynamic enclosure as claimed in claim 1.

In preferred embodiments, the aerodynamic surface of the enclosure is used to guide the majority of air away from the enclosure and vehicle to maintain the aerodynamics of the vehicle. At least a proportion of the remainder is captured and guided to an inlet in the enclosure to assist in cooling a refrigeration unit or the like.

The aerodynamic enclosure may further comprise a refrigeration unit cover for covering at least a part of the refrigeration unit, wherein the spoiler is arranged to interface with the refrigeration unit cover to enable air to pass from the interior of the spoiler into the refrigeration unit cover.

The refrigeration cover and spoiler may comprise a single unit.

The spoiler may be mountable on the cab of a vehicle and includes interface means for interfacing with an air inlet on the refrigeration cover.

The aerodynamic enclosure may further comprise sealing means for forming a flexible seal at the interface between the refrigeration cover and the spoiler.

The aerodynamic enclosure may further comprise air guidance means in the interior of the spoiler arranged to guide air passing into the interior of the spoiler towards the refrigeration unit.

The air guidance means may comprise one or more of ducts, pipes or air guidance surfaces.

The spoiler may comprise a substantially hollow body.

The spoiler may comprise a shell which, when mounted on a surface of a vehicle forms a substantially hollow body in conjunction with the surface of the vehicle.

The one or more inlets may comprise NACA ducts in the aerodynamic surface.

One or more walls of the spoiler may define a flexible surface. Preferably, the one or more walls of the spoiler include a plurality of panels, the plurality of panels being slidably interfaced whereby the one or more walls telescopically expand or contract when flexed. The one or more walls of the spoiler may be arranged to concertina when flexed.

Embodiments of the present invention seek to address the problems encountered in providing refrigeration to vehicles such as lorries whilst at the same time making them as aerodynamic and efficient as possible.

### Brief Description of the Drawings

Embodiments of the present invention will now be described in detail, by way of example only, with reference to the accompanying drawings in which:
Figures 1a and 1b are front and side views of a portion of a vehicle incorporating an aerodynamic enclosure according to an embodiment of the present invention;
Figures 2a and 2b are front and side views of aspects of the enclosure of Figures 1 a and 1 b;
Figures 3a and 3b are front and side views of an alternate embodiment of the present invention; and,
Figure 4 is a sectional view of a further alternate embodiment of the present invention.

### Detailed Description

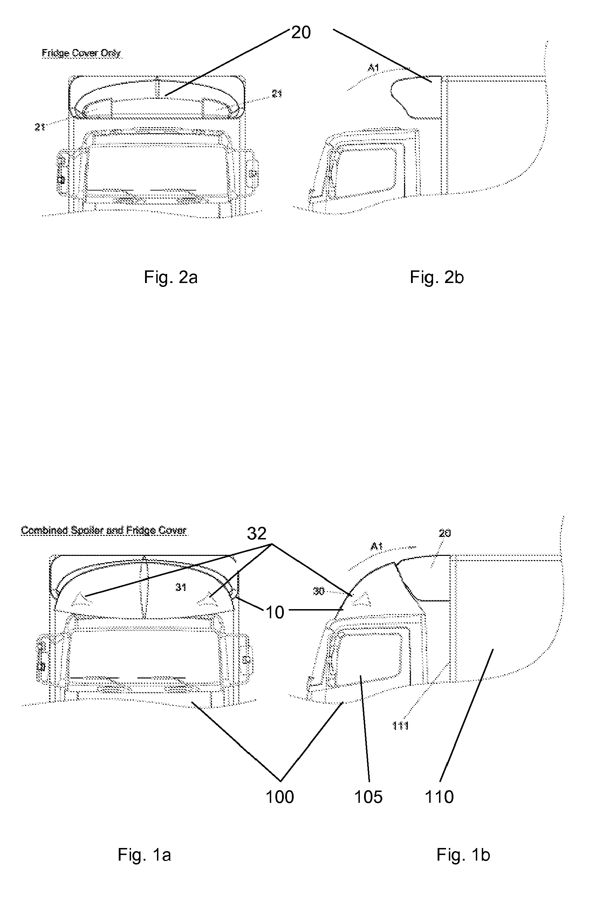

Figures 1a and 1b are front and side views of a portion of a vehicle incorporating an aerodynamic enclosure according to an embodiment of the present invention. Figures 2a and 2b are front and side views of aspects of the enclosure of Figures 1 a and 1 b.

The enclosure 10 includes a refrigeration unit cover 20 and a substantially hollow spoiler 30. The cover 20 includes one or more vents 21. The spoiler 30 includes an aerodynamic surface 31 and one or more air inlets 32.

The illustrated vehicle 100 includes a tractor/cab 105 and a box 110. The vehicle is of a rigid chassis type and therefore there is no relative movement between the cab 105 and box 110 when turning.

A refrigeration unit (not shown as within the cover 20) is mounted on the forward facing wall 111 of the box 110 for cooling the interior of the box 110. The box 110 and the cab 105 are typical of cargo carrying vehicles of the type with which this invention may be used, although it will be appreciated that other vehicles/applications are also applicable.

In use, the refrigeration unit cover 20 is positioned over the refrigeration unit/condenser as shown. The spoiler 30 is then mounted on the cab of the vehicle 100. When mounted, the spoiler 30 and cover 20 interface together such that aerodynamic surface 31 is positioned so as to be in the path of oncoming air in front of the cover 20 when the vehicle is being driven.

As the vehicle is driven, the majority of air (labelled A1) passing over the top of the cab is guided over the aerodynamic surface 31. However, a proportion of the air passes into the air inlets 32. The air passing into the air inlets passes through the inside of the hollow spoiler and at least some of the air reaches the vents 21 of the cover 20 to provide cooling to the refrigeration unit/condenser.

Preferably, the air inlets 32 are NACA ducts.

For aerodynamic efficiency the width of any gap between the cover 20 and spoiler 30 is preferably kept to a minimum, in practice, due to manufacturing tolerances this will be approximately 50-100mm. To further improve the efficiency, the gap may be closed with a flexible seal or brush.

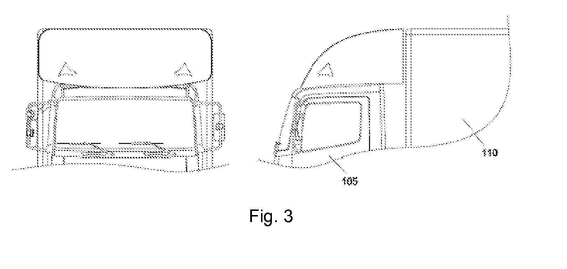

Figures 3a and 3b are front and side views of an alternate embodiment of the present invention.

In the illustrated embodiment, the cover 20 of figures 1a and 1b is integrated with the spoiler 30. While this arrangement has the disadvantage that the unit must be designed for a specific vehicle/refrigeration unit, it means that the gap between the cover 20 and spoiler 30 is not present and improves the aerodynamic performance of the unit. In this arrangement, the cover 20 need not in fact be necessary - the refrigeration unit may simply be open within the confines of the interior of the spoiler to take advantage of whatever air is passed through the inlets 31 into the interior of the spoiler 30.

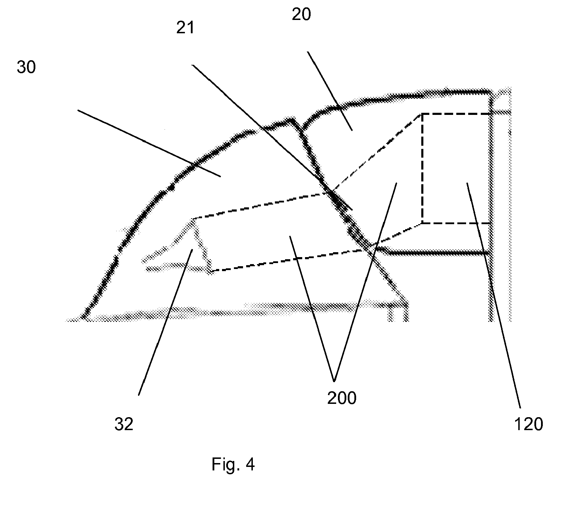

Although the spoiler 30 is described as being hollow and the passage of air within it is unconstrained (which will nonetheless mean that much of the air will reach the vents 21), it will be appreciated that some form of air guidance means 200 (possibly in the form of ducts, pipes, guidance surfaces or the like) may be provided to route the air from the air inlets 32 through the interior of the spoiler 30 towards the vents 21 and optionally through the cover 20 to the refrigeration unit 120. An example arrangement including air guidance means is illustrated in Figure 4. The dashed lines illustrate components interior to the spoiler/cover.

It will be appreciated that the arrangement of Figures 2a and 2b could be used in isolation (without the spoiler) as this still provides benefits to the user.

It will also be appreciated that configurations of the enclosure could be used on vans, trailers, articulated vehicles and the like. In the case of articulated vehicles, relative movement between the cab and box could be taken into account by some form of interface joint between the cover and spoiler enabling the spoiler to rotate with respect to the cover and yet still direct some air into the cover.

In another arrangement, the embodiment of Figure 3 could be configured for articulated vehicles in a manner such that at least part of the body of the spoiler could be formed from a flexible/stretchable material or have a telescopic or concertina type configuration.

In a preferred embodiment, at least a portion of the spoiler walls would be formed from overlapping panels and have a sliding interface that allowed the walls to telescopically expand or contract as the cab turned relative to the box.

An alternative approach (which may be combined with the telescopic walls) would be to configure parts of the walls in a concertina manner. The walls would be flat when the cab and box point in the same direction (ie. the vehicle is going straight) and at least part of the spoiler walls take the form of a concertina when the cab is turned relative to the box.

In this manner, the aerodynamic nature of the spoiler is preserved when most needed (the vehicle is driving straight) and drag from the concertina is introduced when turning.

## Claims

1. An aerodynamic enclosure (10) for a refrigeration unit of a vehicle (100), the enclosure (10) including a spoiler (30), the spoiler (30) having an aerodynamic surface (31) arranged, when the enclosure (30) is positioned in an air flow, to guide a substantial proportion of the air away from the enclosure (10), the spoiler (30) further comprising one or more air inlets (32) arranged to guide at least a part of the remaining air into the interior of the spoiler (30).

2. An aerodynamic enclosure (10) as claimed in claim 1, further comprising a refrigeration unit cover (20) for covering at least a part of the refrigeration unit, wherein the spoiler (30) is arranged to interface with the refrigeration unit cover (20) to enable air to pass from the interior of the spoiler (30) into the refrigeration unit cover (20).

3. An aerodynamic enclosure as claimed in claim 2, wherein the refrigeration cover (20) and spoiler (30) comprise a single unit.

4. An aerodynamic enclosure as claimed in claim 2, wherein the spoiler (30) is mountable on the cab of a vehicle (100) and includes interface means for interfacing with an air inlet on the refrigeration cover (20).

5. An aerodynamic enclosure as claimed in claim 2 or 4, further comprising sealing means for forming a flexible seal at the interface between the refrigeration cover (20) and the spoiler (30).

6. An aerodynamic enclosure as claimed in any preceding claim, further comprising air guidance means (200) in the interior of the spoiler (30) arranged to guide air passing into the interior of the spoiler (30) towards the refrigeration unit.

7. An aerodynamic enclosure as claimed in claim 6, wherein the air guidance means (200) comprises one or more of ducts, pipes or air guidance surfaces.

8. An aerodynamic enclosure as claimed in any preceding claim, wherein the spoiler (30) comprises a substantially hollow body.

9. An aerodynamic enclosure as claimed in any of any preceding claim, wherein the spoiler (30) comprises a shell which, when mounted on a surface of a vehicle (100) forms a substantially hollow body in conjunction with the surface of the vehicle.

10. An aerodynamic enclosure as claimed in any preceding claim, wherein the one or more inlets (32) comprise NACA ducts in the aerodynamic surface.

11. An aerodynamic enclosure as claimed in any preceding claim, wherein one or more walls of the spoiler (30) define a flexible surface.

12. An aerodynamic enclosure as claimed in claim 11, wherein the one or more walls of the spoiler (30) are arranged to concertina when flexed.

13. An aerodynamic enclosure as claimed in claim 11 or 12, wherein the one or more walls of the spoiler include a plurality of panels, the plurality of panels being slidably interfaced whereby the one or more walls telescopically expand or contract when flexed.
